# EUROPEAN PATENT SPECIFICATION

(11) **EP 3 690 818 B1**
(45) Date of publication and mention of the grant of the patent: **14.12.2022**
(21) Application number: 19154537.5
(22) Date of filing: 30.01.2019
(51) Int. Cl.: G06T 11/00, G06T 11/20

(54) **METHOD OF VISUALIZING DATA, DEVICE FOR VISUALIZING DATA AS WELL AS USE OF A METHOD OF VISUALIZING DATA**
VERFAHREN ZUR VISUALISIERUNG VON DATEN, VORRICHTUNG ZUR VISUALISIERUNG VON DATEN SOWIE VERWENDUNG EINES VERFAHREN ZUR VISUALISIERUNG VON DATEN
PROCÉDÉ DE VISUALISATION DE DONNÉES, DISPOSITIF DE VISUALISATION DE DONNÉES, AINSI QUE L'UTILISATION D'UN PROCÉDÉ DE VISUALISATION DE DONNÉES

(43) Date of publication of application: 05.08.2020
(73) Proprietor: Rohde & Schwarz GmbH & Co. KG, 81671 München (DE)
(72) Inventor: GUEZELARSLAN, Baris, 81671 München (DE)
(74) Representative: Prinz & Partner mbB

(56) References cited:
- US-A1- 2011 028 850
- US-B2- 8 576 231
- Markus Vester: "Colour Direction Finder by DF6NM", , 23 June 2003 (2003-06-23), XP055599413, Retrieved from the Internet: URL:http://df6nm.de/ColourDF/ColourDF.htm [retrieved on 2019-06-25]

## Description

The invention relates to a method of visualizing data by a color image as well as to a device for visualizing data by a color image. In addition, the invention relates to use of the method of visualizing data by a color image.

In the state of the art, data related to level, azimuth and elevation, for instance obtained by direction finding, is typically illustrated by separately displayed waterfall diagrams, also called waterfall spectra. Thus, a level-based waterfall spectrum, an azimuth-based waterfall spectrum as well as an elevation-based waterfall spectrum are generated for visualizing the respective data in an illustrative manner. Hence, a user is enabled to retrieve the corresponding information from the separate waterfall spectra.

However, the different waterfall spectra are displayed separately from each other as each information, namely level, azimuth or elevation, is illustrated in a separate diagram assigned to a dedicated window of the display or even to separately formed displays.

This however makes it more complex for the user to understand the information visualized correctly as the user has to combine the information content of the separate diagrams in order to retrieve the respective information regarding level, azimuth and elevation.

Furthermore, the respective waterfall spectrum used for illustrating level, azimuth or elevation is assigned to a linear color model, for instance the RGB color space, even though azimuth and elevation both relate to an angle, particularly an angle in the range of 0° to 360°. Thus, the operator has to mentally transfer the information visualized linearly.

In addition, modern direction finding systems use artificial intelligence or rather deep learning techniques to evaluate or rather analyze the respective information displayed. These direction finding systems have to be trained by using the waterfall spectra. However, the training is complicated due to the several diagrams that have to be taken into account for training purposes. Hence, the training is time consuming and it requires a lot of efforts.

In the presentation "Wideband Direction-Finder with Colour Encoded Spectrogram Display" by Markus Vester, an overview is provided according to which the respective colors of pixels of a waterfall spectrum are determined based on a RGB calculation, wherein the respective color provides information concerning the respective azimuth.

In US 8 576 231 B2, a spectrum analyzer interface is described that comprises a display on which information can be displayed, e.g. data associated with direction finding. The spectrum analyzer interface interacts with a mouse, keyboard or touch sensitive screen in order to allow the user to make certain settings.

Accordingly, there is a need for a more compact and more intuitive visualization of the respective data that is assigned to at least two of level, azimuth and elevation, particularly wherein the visualization is improved for training purposes.

The invention provides a method of visualizing data by a color image with at least two dimensions, in particular three dimensions, wherein the color image has a plurality of pixels. Each pixel is associated with a set of hue parameters, with a set of saturation parameters and with a set of value or rather lightness parameters. The data to be visualized relates to data obtained from a signal received during direction finding. The data to be visualized is assigned to level and azimuth and/or elevation. The data is represented in the color image by hue, saturation and value of the respective pixels or rather hue, saturation and lightness of the respective pixels. A user selectively assigns hue, saturation and/or value or rather lightness of the color image to level, azimuth and/or elevation of the data. Hue, saturation and/or value or rather lightness is set by rotating an operation member.

Accordingly, the so-called HSV model or rather the so-called HSL model is applied for visualizing the respective data. The HSV model or rather the HSL model comprises inter alia the parameter hue assigned to an angular dimension in contrast to the RGB color model that is linear. Therefore, the HSV or rather HSL model corresponds to a circular color model that more closely aligns with the way human vision perceives color-making attributes. In fact, the colors of each hue used for illustration are arranged in a radial slice around a central axis that is assigned to neutral colors which ranges from black at the bottom to white at the top. Hence, the parameter hue typically starts at the red primary at 0° wherein it passes through the green primary at 120° and the blue primary at 240°. At an angle of 360°, the hue parameter gets back to red primary. Accordingly, the respective information to be visualized that is assigned to an angle, namely azimuth or elevation, may be represented in the color image by the hue parameter assigned to a circular scale. Thus, an intuitive assignment is provided.

Particularly, the information regarding azimuth is represented by the hue parameter since the azimuth is one of the most important information in direction finding.

Generally, the respective information to be visualized, namely level, azimuth and/or elevation, is represented in the color image by hue, saturation and/or value or rather hue, saturation and/or lightness depending on the respective color model used, namely the HSV model or rather the HSL model. Thus, at least two different kinds of information, particularly level and azimuth, can be illustrated by the color image in a combined manner.

In otherwords, a combined illustration of the respective data or rather information is possible wherein the information is assigned to dimensions of the color image as they correspond to the parameters of the color image, namely hue, saturation and value or rather lightness.

In fact, the data to be visualized may comprise two dimensions such as level and azimuth or rather level and elevation wherein the respective information is assigned to a dedicated dimension of the color image. The respective information or rather dimension may correspond to one of the parameters of the color model applied, namely hue, saturation and value or rather hue, saturation and lightness.

Moreover, the data to be visualized may comprise three dimensions, namely level, azimuth and elevation, wherein each dimension is associated to one specific parameter of the color model applied, namely hue, saturation and value or rather hue, saturation and lightness.

In general, the level corresponds to a magnitude or an amplitude of a signal assigned to the data to be visualized.

Generally, the data to be visualized is obtained by direction finding.

Therefore, the user is enabled to decide which information of the data, assigned to a dimension of the color image, is represented by the respective parameters of the color image, namely hue, saturation and value or rather hue, saturation and lightness. In fact, the user is enabled to choose the visualization properties according to his personal preferences.

Generally, the user is enabled to freely choose any two or three dimensions to be displayed as the user is not limited to classic waterfall diagrams and/or direction diagrams.

The operation member may be established by a knob, a dial or any other suitable operation member allowing a rotational motion. Particularly, the hue parameters assigned to a circle can be selected in an intuitive manner while interacting with a rotatable operation member.

According to an aspect, the data is displayed in a single color image on a display. Therefore, it is no more necessary that two or more separate waterfall spectra are generated and displayed for providing the respective information with regard to level and azimuth and/or elevation. Thus, a more compact visualization of the information is possible without limiting the information content.

In fact, the single color image allows for displaying the information of several waterfall spectra in one single display or rather one single window. In contrast thereto, traditional visualization techniques only allow for displaying the respective information in three different windows or rather three different displays. Thus, a more compact way of illustrating the respective information is provided.

Another aspect provides that the color image corresponds to a waterfall diagram, particularly a direction-based waterfall diagram. The color image may be illustrated as a waterfall diagram that additionally comprises directional information simultaneously. In other words, level and azimuth may be illustrated simultaneously in the respective waterfall diagram. In a similar manner, level and elevation may be illustrated simultaneously in the respective waterfall diagram. The waterfall diagram may also be called waterfall spectrum, in particular direction-based waterfall spectrum (DW spectrum) that is different to a conventional waterfall spectrum having no direction information.

Generally, a waterfall diagram or rather waterfall spectrum may be used for illustrating on the x-axis the frequency of a signal and on the y-axis the time. The color of the respective pixels, namely the ones in the grid established by the x- and y-axes, comprise at least two dimensions as the color visualized is based on level and azimuth and/or elevation. In fact, level and azimuth and/or elevation affect parameters of the color image such as hue, saturation and value or rather lightness. Hence, the color of the respective pixel relates to hue, saturation and value or rather lightness which in turn are associated with the data to be displayed, namely level and azimuth and/or elevation.

Particularly, a user selectively assigns hue, saturation and value or rather lightness of the color image to level, azimuth and elevation of the data. In other words, the user can feely decide which parameter of the color image, namely hue, saturation and value or rather lightness, is used for illustrating the respective information. Hence, the assignment can be varied in a selective manner by the user.

In the HSV color model, the hue parameters may be used for representing the information with regard to azimuth whereas the value parameters or the saturation parameters are used for representing the level. Accordingly, both conventional waterfall spectra can be unified in a single illustration that corresponds to a combined visualization of the respective information.

In addition, the elevation as a third dimension may be represented by the saturation parameters or rather the value parameters so that three different kinds of information, namely azimuth, level as well as elevation, are visualized in the combined representation.

In the HSL color model, the lightness parameters are used instead of the value parameters of the HSV color model mentioned above.

Generally, the user is enabled to redefine the respective assignment(s) according to his personal preferences.

According to an aspect, a subset of hue parameters, a subset of saturation parameters and/or a subset of value or rather lightness parameters is selected by the user for visualizing the associated information with the respective parameter(s). Hence, the user is enabled to set a color for a specific data area according to his personal preferences.

Accordingly, the subset of hue parameters and/or the subset of saturation parameters and/or the subset of value or rather lightness parameters are/is selected by the user for visualizing the associated information with the respective parameter(s).

The specific data area may correspond to a data area of interest that shall be displayed (filter) or rather that shall have a certain color (personal preferences).

As already mentioned, the colors of each hue are arranged in a radial slice around a central axis so that the hue parameters together establish a circle. Thus, the user is enabled to assign a certain data area to a sector of the circle such that the data area of interest is illustrated by a desired color. In fact, the user is enabled to freely choose the respective color for a certain data area, in particular a certain angular range provided that the hue parameters are assigned to azimuth or elevation.

For instance, an azimuth angle of 120° may be assigned to red primary due to a respective selection by the user. Hence, an azimuth angle of 240° would be assigned to green primary whereas an azimuth angle of 360° or rather 0° would be assigned to blue primary. However, the assignment may be varied according to the personal preferences.

Moreover, a subset of hue parameters, a subset of saturation parameters and/or a subset of value or rather lightness parameters may be chosen by a user for visualizing the data. For instance, a color space sector or a circle sector of the representation model, namely the HSV representation model or rather the HSL representation model, may be chosen by the user depending on a range that is of interest. This may relate to a filter applied since a certain range of the data is selected by choosing a certain subset of respective parameters. In other words, the user chooses a certain subset of parameters in order to choose a certain subset of data assigned thereto.

Typically, the hue parameters are used for an information assigned to an angle wherein controlling a respective subset of the hue parameters may be realized by a round dial or a knob that might be turned. As already mentioned, the colors of each hue are arranged in a radial slice around a central axis so that the hue parameters together establish a circle. Accordingly, a respective subset of the hue parameters is assigned to at least one sector of the circle.

As already mentioned, the data range may be filtered by choosing a respective subset of the parameters, for instance the saturation parameters as well as the value or rather lightness parameters.

For instance, a subset of the saturation parameters is used for defining a threshold for the information displayed by the saturation parameters.

In addition, the value or rather lightness subset may define or rather restrict the displayed height of the color space.

By choosing a certain subset of the saturation parameters or a certain subset of the value or rather lightness parameters, a level threshold may be set by the user.

According to a certain embodiment, a threshold value may be set via an operation member by a pinch motion. Thus, the user may interact with the operation member for setting a respective threshold value. For instance, the pinch motion may relate to selecting a subset of saturation parameters or a subset of value or rather lightness parameters as already mentioned.

The operation member may comprise a touch-sensitive surface on which the user may perform the pinch motion by using his fingers.

In an initial operation mode, azimuth may be represented by hue and level may be represented by saturation. Further, elevation may be represented by value or lightness in the initial operation mode. Depending on the color model used, the third kind of information or rather the third dimension, namely elevation, is represented by the value or rather lightness parameters.

Further, the invention provides a device for visualizing data by a color image with at least two dimensions, in particular three dimensions, wherein the device comprises a display and a processing unit, wherein the device is configured to perform a method as mentioned above. The device corresponds to a direction finder system. Thus, the device is enabled to visualize information in a more compact and intuitive manner.

The device has an operation member that is configured to convert a user input into a change of hue, saturation and/or value or rather lightness. The operation member may be a dial, a round knob, a throttle, a slide control or any other suitable operation member.

In fact, the user may select a certain dimension of the color image wherein a preset value can be changed by interacting with the operation member in an appropriate manner. By selecting the respective dimension, the user chooses which content of the color image is changed when interacting with the operation member since the parameters to be visualized by the color image are associated to a certain dimension of the color image.

The operation member is rotatable. Hence, rotating the operation member yields a selection of a certain subset of a respective parameter selected previously. Therefore, the user may easily interact with the device, particularly the operation member, for changing a parameter assigned to an information to be visualized such as azimuth or rather elevation.

Furthermore, the operation member may have a touch-sensitive surface. Therefore, the user may easily interact with the device, particularly the operation member, for changing a parameter assigned to an information to be visualized such as level. In fact, the user may easily set a certain threshold or rather a filter while interacting with the touch-sensitive surface of the operation member, particularly a level threshold. For instance, the operator simply performs a pinch motion on the touch-sensitive surface to set the respective filter or rather threshold.

Another aspect provides use of the method mentioned above for training a neural network. In fact, the information with regard to level and azimuth and/or elevation can be displayed in a more compact manner since all information is displayed in a single color image on the display of the device. This simplifies training a neural network as only the single color image has to be taken into account for training purposes whereas traditional visualizing techniques require at least two different independent windows or rather displays that have to be taken into account. Accordingly, the required time for training the neural network can be reduced significantly.

Therefore, the present invention allows for configuration and/or setting information for training purposes in an easy and fast manner since only a single display or rather window has to be taken into account that shows different kinds of information simultaneously, namely level, azimuth and elevation, particularly of a signal received during direction finding.

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic overview of one representative embodiment of a device according to the disclosure,
- Figure 2 shows a schematic representation of the HSV color model, and
- Figure 3 shows a detail of Figure 1.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

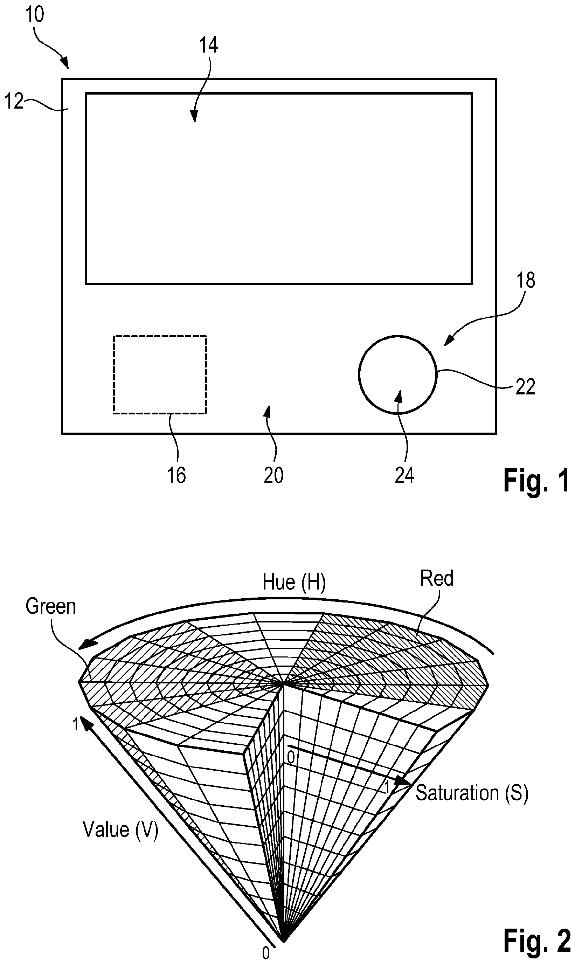

In Figure 1, a device 10 is shown that is used to visualize data by a color image with at least two dimensions.

The data to be visualized may relate to data obtained from a signal, for instance during direction finding. Hence, the data relates to level, azimuth and elevation. Accordingly, these three different kinds of information may establish the data to be visualized.

The device 10 comprises a housing 12 as well as a display 14 wherein a processing unit 16 integrated in the housing 12 is connected with the display 14. The processing unit 16 is configured to process the data to be visualized which is received via an antenna or any other suitable input.

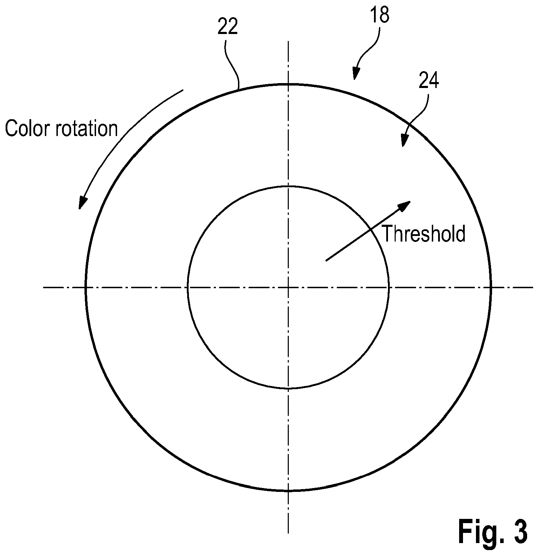

Moreover, the device 10 has an operation member 18 that is provided at a front side 20 of the device 10. An operator of the device 10, also called user, is enabled to perform certain settings of the device 10 by interacting with the operation member 18 as will be described hereinafter. The operation member 18 is shown in Figure 3 in more detail.

In the shown embodiment, the operation member 18 is established by a knob 22 that is rotatable.

Moreover, the operation member 18 has a touch-sensitive surface 24 with which the operator may also interact for setting certain operation parameters of the device 10.

In general, the device 10, in particular the processing unit 16, is configured to perform a method of visualizing data by a color image as described hereinafter.

In fact, the color image is displayed by the display 14 of the device 10 wherein the color image has a plurality of pixels. Each pixel is associated with a set of hue H parameters, a set of saturation S parameters and a set of value V parameters. In other words, the color image is assigned to the HSV representation model as illustrated in Figure 2.

Alternatively, the HSL representation model may be used that comprises the parameters hue H, saturation S and lightness L. In the HSL color model, the value V parameters used in the HSV color model are replaced by the lightness L parameters.

As already mentioned, the device 10 may correspond to a direction finder system since the data to be visualized by the device 10 is assigned to level, azimuth and elevation of a signal received by the direction finding system.

The respective data is represented in the color image by the parameters of the color image, namely hue H, saturation S and value V or rather lightness L of the respective pixels together establishing the color image.

Thus, the different kinds of information, namely level, azimuth and elevation, can be displayed in a single color image on the display 14 since the different kinds of information are visualized by parameters of the color image.

The color image illustrated on the display 14 corresponds to a waterfall diagram, in particular a direction-based waterfall diagram.

Accordingly, the data to be visualized, namely level, azimuth and elevation, are assigned to a certain pixel in the diagram that in turn corresponds to a certain frequency and a certain time in the waterfall spectrum.

In other words, the waterfall diagram shows the data to be visualized in a diagram comprising time versus frequency since the x-axis of the diagram corresponds to the frequency whereas the y-axis of the diagram corresponds to time.

The individual pixels of the color image displayed relate to the parameters hue H, saturation S and value V or rather lightness L so that the color of each pixel is defined by level, azimuth and/or elevation that are assigned to the respective parameters of the color image.

In general, the user of the device 10 is enabled to select the assignment of the parameters of the color image, namely hue H, saturation S and/or value V or rather lightness L, to a corresponding dimension of the color image, in particular level, azimuth and/or elevation.

In other words, the user may select which kind of information, namely level, azimuth and/or elevation, of the data to be visualized is assigned to a certain parameter of the color image, namely hue H, saturation S and value V or rather lightness L. Hence, the user is enabled to vary the visualization according to his personal preferences.

In an initial operation mode of the device 10, azimuth may be represented by hue H wherein level is represented by saturation S. Thus, elevation may be represented by value V or lightness L depending on the color model applied. This initial operation mode ensures that the information assigned to an angle, namely azimuth, is represented by hue H typically used for illustrating an angular information as the respective primary colors, namely primary red, primary green and primary blue, are assigned to certain sectors of the hue H parameters, which are located around a center axis in the respective color model as schematically shown in Figure 2.

In addition, the user may be enabled to select a certain subset of the respective color image parameters, namely a subset of hue H parameters, a subset of saturation S parameters and/or a subset of value V or rather lightness L parameters for visualizing the data. Depending on the selected subset only a certain sector of the circular hue H parameters may be used.

This selection may correspond to applying a filter on the data to be visualized, for instance regarding the displayed height (value V), a certain sector (hue H) or rather a certain depth (saturation S) of the color space shown in Figure 2.

In addition, the operator of the device 10 may set a certain threshold for the data to be displayed on the display 14 by performing a pinch motion on the touch-sensitive surface 24 of the operation member 18, in particular the rotatable operation member 18.

The pinch motion is converted into a selection of a certain subset depending on the length of the pinch motion.

Further, the operator or rather user of the device 10 may select a certain subset by rotating the operation member 18. In fact, the hue H parameters, the saturation S parameters and/or value V or rather lightness L parameters may be set appropriately.

Generally, the user previously selects a certain dimension of the color image or rather a parameter, namely hue H, saturation S or rather value V, of which a subset shall be used. Once, the user has selected a certain dimension, the user may select a subset by rotating the operation member 18 or rather performing any unambiguous motions such as a pinch motion.

In Figure 3, the operation member 18 is shown in more detail while the respective setting functionalities are also depicted.

The pinch motion on the touch-sensitive surface 24 may correspond to setting a level threshold such that a certain subset of data to be displayed is chosen while selecting a certain subset of associated parameters.

For instance, only data assigned to value V parameters more than 0.5, namely between 0.5 and 1, are illustrated in the color image, for instance the waterfall spectrum.

In addition, the user may personalize the visualization by selecting the hue H parameters or rather the corresponding dimension of the color image so that the user is enabled to assign the color primary blue to an azimuth angle of 0°. Thus can be done by rotating the respective operation member 18.

Hence, an azimuth angle of 120° yields a hue H parameter assigned to primary red for the respective pixel that is located in the color image due to the frequency (x-axis) and the time (y-axis).

In general, a single color image is provided that visualizes all three kinds of information, namely level, azimuth and elevation, of a signal received by the direction finding system associated with the device 10.

Since a single color image is displayed, the output of the method of visualizing the respective data provides many information in a compact manner which can be used for training a neural network.

In fact, the training is simplified and improved since a single color image is used instead of three separate images as it is done with conventional visualization techniques so far.

## Claims

1. A method of visualizing data by a color image with at least two dimensions, in particular three dimensions, wherein the color image has a plurality of pixels, wherein each pixel is associated with a set of hue (H) parameters, with a set of saturation (S) parameters and with a set of value (V) or rather lightness (L) parameters, wherein the data to be visualized relates to data obtained from a signal received during direction finding, wherein the data to be visualized is assigned to level and azimuth and/or elevation, and wherein the data is represented in the color image by hue (H), saturation (S) and value (V) or rather lightness (L) of the respective pixels, wherein a user selectively assigns hue (H), saturation (S) and/or value (V) or rather lightness (L) of the color image to level, azimuth and/or elevation of the data, and wherein hue (H), saturation (S) and/or value (V) or rather lightness (L) is set by rotating an operation member.

2. The method according to claim 1, wherein the data is displayed in a single color image on a display.

3. The method according to claim 1 or 2, wherein the color image corresponds to a waterfall diagram, in particular a direction-based waterfall diagram.

4. The method according to any of the preceding claims, wherein a user selectively assigns hue (H), saturation (S) and/or value (V) or rather lightness (L) to a corresponding dimension of the color image.

5. The method according to any of the preceding claims, wherein a subset of hue (H) parameters, a subset of saturation (S) parameters and/or a subset of value (V) or rather lightness (L) parameters is selected by the user for visualizing the associated data.

6. The method according to any of the preceding claims, wherein a threshold value for the data to be displayed is set via an operation member by a pinch motion.

7. The method according to any of the preceding claims, wherein azimuth is represented by hue (H) and level is represented by saturation (S), and wherein elevation is represented by value (V) or lightness (L).

8. A device (10) for visualizing data by a color image with at least two dimensions, in particular three dimensions, wherein the device (10) corresponds to a direction finder system, wherein the device (10) comprises a display (14) and a processing unit (16), and wherein the device (10) is configured to perform a method according to any of the preceding claims, wherein the device (10) has an operation member (18) that is configured to convert a user input into a change of hue (H), saturation (S) and/or value (V) or rather lightness (L), and wherein the operation member (18) is rotatable.

9. The device (10) according to claim 8, wherein the operation member has a touch-sensitive surface (24).

10. A method for training a neural network using the color image provided by the method according to any of claims 1 to 7.

## Patentansprüche

1. Verfahren zum Visualisieren von Daten durch ein Farbbild mit mindestens zwei Dimensionen, insbesondere drei Dimensionen, wobei das Farbbild eine Vielzahl von Pixeln aufweist, wobei jedes Pixel mit einem Satz von Farbton(H)-Parametern, mit einem Satz von Sättigungs(S)-Parametern und mit einem Satz von Wert(V)- oder vielmehr Helligkeits(L)-Parametern verknüpft ist, wobei die zu visualisierenden Daten Daten betreffen, die während einer Peilung von einem Signal empfangen werden, wobei die zu visualisierenden Daten Höhe und Azimut und/oder Elevation zugewiesen sind und wobei die Daten im Farbbild durch Farbton (H), Sättigung (S) und Wert (V) oder vielmehr Helligkeit (L) der jeweiligen Pixel repräsentiert sind, wobei ein Benutzer Farbton (H), Sättigung (S) und/oder Wert (V) oder vielmehr Helligkeit (L) des Farbbildes selektiv Höhe, Azimut und/oder Elevation der Daten zuweist und wobei Farbton (H), Sättigung (S) und/oder Wert (V) oder vielmehr Helligkeit (L) durch Drehen eines Betätigungselements eingestellt werden.

2. Verfahren nach Anspruch 1, wobei die Daten in einem einzelnen Farbbild auf einer Anzeige angezeigt werden.

3. Verfahren nach Anspruch 1 oder 2, wobei das Farbbild einem Wasserfalldiagramm, insbesondere einem richtungsbasierten Wasserfalldiagramm entspricht.

4. Verfahren nach einem der vorhergehenden Ansprüche, wobei ein Benutzer Farbton (H), Sättigung (S) und/oder Wert (V) oder vielmehr Helligkeit (L) selektiv einer entsprechenden Dimension des Farbbildes zuweist.

5. Verfahren nach einem der vorhergehenden Ansprüche, wobei ein Untersatz von Farbton(H)-Parametern, ein Untersatz von Sättigungs(S)-Parametern und/oder ein Untersatz von Wert(V)- oder vielmehr Helligkeits(L)-Parametern vom Benutzer zum Visualisieren der verknüpften Daten ausgewählt werden.

6. Verfahren nach einem der vorhergehenden Ansprüche, wobei über ein Betätigungselement mittels einer Kneifbewegung ein Schwellwert für die anzuzeigenden Daten eingestellt wird.

7. Verfahren nach einem der vorhergehenden Ansprüche, wobei Azimut durch Farbton (H) repräsentiert ist und Höhe durch Sättigung (S) repräsentiert ist und wobei Elevation durch Wert (V) bzw. Helligkeit (L) repräsentiert ist.

8. Vorrichtung (10) zum Visualisieren von Daten durch ein Farbbild mit mindestens zwei Dimensionen, insbesondere drei Dimensionen, wobei die Vorrichtung (10) einem Peilsystem entspricht, wobei die Vorrichtung (10) eine Anzeige (14) und eine Verarbeitungseinheit (16) umfasst und wobei die Vorrichtung (10) dazu ausgelegt ist, ein Verfahren nach einem der vorhergehenden Ansprüche durchzuführen, wobei die Vorrichtung (10) ein Betätigungselement (18) aufweist, das dazu ausgelegt ist, eine Benutzereingabe in eine Änderung von Farbton (H), Sättigung (S) und/oder Wert (V) oder vielmehr Helligkeit (L) umzuwandeln, und wobei das Betätigungselement (18) drehbar ist.

9. Vorrichtung (10) nach Anspruch 8, wobei das Betätigungselement eine berührungsempfindliche Oberfläche (24) aufweist.

10. Verfahren zum Trainieren eines neuronalen Netzwerks unter Verwendung des Farbbildes, das durch das Verfahren nach einem der Ansprüche 1 bis 7 bereitgestellt wird.

## Revendications

1. Procédé de visualisation de données par une image en couleurs ayant au moins deux dimensions, en particulier trois dimensions, dans lequel l'image en couleurs possède une pluralité de pixels, dans lequel chaque pixel est associé à un ensemble de paramètres de teinte (H), à un ensemble de paramètres de saturation (S) et à un ensemble de paramètres de valeur (V) ou plus exactement de luminosité (L), dans lequel les données devant être visualisées se rapportent à des données obtenues à partir d'un signal reçu au cours d'une goniométrie, dans lequel les données devant être visualisées sont attribuées à un niveau et à un azimut et/ou à une élévation, et dans lequel les données sont représentées dans l'image en couleurs par la teinte (H), la saturation (S) et la valeur (V) ou plus exactement la luminosité (L) des pixels respectifs, dans lequel un utilisateur attribue sélectivement la teinte (H), la saturation (S) et/ou la valeur (V) ou plus exactement la luminosité (L) de l'image en couleurs au niveau, à l'azimut et/ou à l'élévation des données, et dans lequel la teinte (H), la saturation (S) et/ou la valeur (V) ou plus exactement la luminosité (L) sont définies par la rotation d'un organe opérationnel.

2. Procédé selon la revendication 1, dans lequel les données sont affichées dans une image monochrome sur un afficheur.

3. Procédé selon la revendication 1 ou 2, dans lequel l'image en couleurs correspond à un diagramme en cascade, en particulier un diagramme en cascade basé sur la direction.

4. Procédé selon l'une quelconque des revendications précédentes, dans lequel un utilisateur attribue sélectivement la teinte (H), la saturation (S) et/ou la valeur (V) ou plus exactement la luminosité (L) à une dimension correspondante de l'image en couleurs.

5. Procédé selon l'une quelconque des revendications précédentes, dans lequel un sous-ensemble de paramètres de teinte (H), un sous-ensemble de paramètres de saturation (S) et/ou un sous-ensemble de paramètres de valeur (V) ou plus exactement de luminosité (L) est sélectionné par l'utilisateur pour la visualisation des données associées.

6. Procédé selon l'une quelconque des revendications précédentes, dans lequel une valeur seuil pour les données devant être affichées est définie via un organe opérationnel par un mouvement de pincement.

7. Procédé selon l'une quelconque des revendications précédentes, dans lequel l'azimut est représenté par la teinte (H) et le niveau est représenté par la saturation (S), et dans lequel l'élévation est représentée par la valeur (V) ou la luminosité (L).

8. Dispositif (10) pour la visualisation de données par une image en couleurs ayant au moins deux dimensions, en particulier trois dimensions, dans lequel le dispositif (10) correspond à un système de goniométrie, dans lequel le dispositif (10) comprend un afficheur (14) et une unité de traitement (16), et dans lequel le dispositif (10) est configuré pour réaliser un procédé selon l'une quelconque des revendications précédentes, dans lequel le dispositif (10) possède un organe opérationnel (18) qui est configuré pour convertir une entrée d'utilisateur en un changement de teinte (H), de saturation (S) et/ou de valeur (V) ou plus exactement de luminosité (L), et dans lequel l'organe opérationnel (18) est rotatif.

9. Dispositif (10) selon la revendication 8, dans lequel l'organe opérationnel possède une surface sensible au toucher (24) .

10. Procédé pour l'entraînement d'un réseau neuronal à l'aide de l'image en couleurs fournie par le procédé selon l'une quelconque des revendications 1 à 7.
